# EUROPEAN PATENT SPECIFICATION

(11) **EP 2 880 224 B1**
(45) Date of publication and mention of the grant of the patent: **30.11.2016**
(21) Application number: 12767093.3
(22) Date of filing: 01.08.2012
(51) Int. Cl.: E04D 1/26

(54) **COATING SYSTEM FOR ROOF COVERING WITH PATTERN OF THE COVERING MANTLE BY THREE-DIMENSIONAL EFFECT AND LAMINATED BITUMINOUS TILE**
BESCHICHTUNGSSYSTEM FÜR DACHABDECKUNG MIT MUSTER DES BEDACHUNGSMANTELS DURCH EINEN DREIDIMENSIONALEN EFFEKT UND LAMINIERTE BITUMINÖSE FLIESE
SYSTÈME DE BARDAGE POUR COUVERTURE DE TOIT AVEC MOTIF DU MANTEAU DE COUVERTURE PAR EFFET TRIDIMENSIONNEL ET TUILE BITUMINEUSE STRATIFIÉE

(43) Date of publication of application: 10.06.2015
(73) Proprietor: Tegola Canadese SPA, 31029 Vittorio Veneto (TV) (IT)
(72) Inventor: GRAZIANO, Peterle, 32016 Farra D'Alpago (BL) (IT)
(74) Representative: Osti, Biancamaria
(86) International application number: PCT/IB2012/001486
(87) International publication number: WO 2014/020370

(56) References cited:
- EP-A1- 1 460 197
- US-A- 1 776 949
- US-A- 4 795 661
- US-A1- 2004 107 664

## Description

The present invention relates to a coating system in bituminous laminated tiles for covering mantle of roof with pattern by three-dimensional effect of such a way as to give the said mantle, a traditional aspect of the clay type, such as a roof tile-like or clay tile-like.

### Application's field

At latitudes mainly European, in the context of discontinuous roofing of residential applications, products traditionally used in roofing tiles are mostly by clay, but also cement, and ancient slate or other stones. For example, in the clay roofing, roof tile, in its various forms, is a shaped clay element of which is applied from the time of the Romans, widespread in Europe but also in the Arab world, and has a load of the structure of the roof for about 60 kg/m2. In northern Europe have also developed the coverings with concrete tiles, which are now produced in different colors by means of co-extrusion, and whose application provide to weighting the structure of about 50 kg / m, while with the stone coverings it can be reached weight of up to 100 kg / sqm.
The said covering elements, in general, are applicable for roofs with a slope of less than 50° and greater than 15° and, in current construction techniques, are often combined with a layer of waterproof membrane to guarantee the water tightness of the covering.
We may reasonably convey about the aesthetic effect that a tile roofing mantle gives to the roof of a building, which taken as a whole is of valuable feature. Beyond the color tone and good quality characteristics, the overall aesthetic appearance of the roof with a tile covering, in principle suggests to the consumer, an aspect of solidity, of overall robustness and stability over time, together with the peculiarities aesthetic and architectural blend well in a typical building of the European latitudes.

Known are also the bituminous tiles. The bituminous classical tile, with respect to the elements of clay type, has a greater adaptability to all climates and all geometries of roofs. It's a walk-on cover that aggravates the structure for averagely 10 kg/m2. Can be used for all slopes up to the vertical and ensures the water tightness of the roof for slopes over 20%. As a product, which unlike the previous one is mostly flat, you may be able to provide a three-dimensional appearance to the surface of the roof intervening with a play of colors and shades.

For example, Canadian Tile ® www.tegolacanadese.com it is one of the main makers of this product, ranking among the best international companies that produce and sell bituminous tiles. In principle, to produce a conventional bituminous tile, it is required that for example a layer of glass veil, the so-called carrier, carried out by an accumulator is started through a coating station. The coating station has the task of associating a layer of bitumen on both the top and bottom of the layer of glass veil. With the aim of increasing the fire resistance and weathering, are then merged stabilizers minerals and subsequently the grit for example formed from crushed stone, pigmented and possibly treated with a ceramic procedure, which is applied only on the top surface of the coating and subsequently pressed. The function of the grit is to confer to the bituminous flat tile color and at the same time to protect the coating from the action of ultraviolet rays. Finally, a layer of silica sand-based release agent is applied on the lower surface to prevent the compound from sticking to the plant and that the tiles do not glue to each other during the packaging. The artifact multilayer thus obtained is then cut into tiles of the requested format. Some variants to the conventional bituminous tiles, may provide for the application to the substrate thus obtained, of a further coating layer, which can also be metallic.

In recent years have gradually developed into the market laminated bituminous tiles, which thanks to a special double-layer overlap and the use of very natural color palettes, they propose to call that height effect of the aspect of the coverings typical of traditional roofs. However, the exposed portion of the bituminous classical or laminated tile, i.e. the part that remains visible after installation, is less than half the height of the tile itself. On this point it is interesting to note that according to established techniques during installation, to prevent rising of the water, it is necessary to overlap the row subsequent to the one already installed for more than half the height of the tile itself.
By way of example, one can generally say that for elements of length 1000mm and height 340 mm, the exposed portion of a tile is thus equal to 145 mm, while for elements of 420 mm the exposed portion rises up to 185mm. In any case, it is to lay an average of six to seven tiles per square meter.

### State of the art

With the aim of identifying the state of the art relevant to the subject matter of the present invention, was conducted a search, aimed at identifying prior documents, both part of the information deducible commonly via the network, both in the patent, tracking the following documents, which by the applicant may be considered to be of importance:
D1 bituminous tile of the GAF company
D2 CA2754648 (Binkley et al.)
D3 US2011197534 (Belt)
D4 US2003097811 (Becker et al.)
D5 CA1189277 (Slocum et al.)
D6 EP1460197 (Iko ind.)

D1, is what can be inferred from the site www.gaf.com. It describes a laminated bituminous tile called mod. Monaco the size of 1016mm in width to a height of 432mm. The overall shape, is almost rectangular, with the profile of the upper edge and the lateral edges which is straight, while the profile of the lower edge is shaped. Still more in particular, said bituminous tile is composed of two layers of the same kind but of different hue, each coupled by overlap, respectively, a first base layer with a dark shade, whose profile of the bottom edge is capped or geometrically defined by a series of open brokenness, each brokenness composed of three segments, of which two oblique and opposite with respect to a straight line of union of said two oblique sides which is horizontal and parallel to the profile of the upper edge. The second layer which is superimposed with respect to said first layer, coincides exactly with the profile of the upper edge of the first layer and partially with the profile of the lateral edge. The said second layer in correspondence of the lower portion of the tile, has of a series of notches closed on three sides, which are equidistant from each other geometrically shaped in the form of an upside down isosceles trapezium, and with on the sides of said tile, respectively the right and left side two partial notches, each of which corresponding to about half of the main notch. Performing the laying of bituminous tiles type D1, by means of the partial overlap of tiles on one another, starting from the gutter line, doing so to make coincide the trapezoidal notches the one below and aligned relative to each other. In such way it's obtained a three-dimensional mantle effect, which overall gives to the roof an aesthetic appearance similar to the covering mantle in clay of a clay tile.

D2 describes a bituminous tile of the type for the composition of a cover, where the said bituminous tile is of the multilayer type, with a first and a second layer coupled to overlap.
- A first layer having an inner surface and an outer surface, the outer surface of the first layer of the type apt to provide at least a portion coated with grit;
- A second layer having an inner surface and an outer surface, at least a portion of the outer surface of said second adhesive layer to at least a portion of the inner surface of the first layer, and a first front edge of the first layer aligned with a second front edge of the second layer.
The lower part of the bituminous tile, is shaped so as to provide areas carved in the shape of an upside down isosceles trapezoid, and in correspondence with the lateral edge, a scored portion equal to half of the adjacent. The aesthetic effect which imparts said cover is of the type with three-dimensional pattern.

D3 similarly to the previous one, describes a bituminous tile which is suitable to be superimposed presenting a lip along the head of overlap. D4 proposes a multi-layer bituminous tile whose side edges, are shaped in such a way as to constitute a male female groove during the lateral joining of the tiles. D5, describes a tile made of composite material of wood, which is adapted to be superimposed by lateral joining to an adjacent tile. D6 provide a roof cladding system comprising several laminated bitouminous tiles each composed of two layers, which are coupled and overlap each other in a staggered way in the longitudinal direction, so that at each end a lip is created, and where the fret lip and the band lip are designed to overlap each other in the roof cladding system, and where the tiles overlap each other in such a way that the exposure correspond to 66%.

All things considered, it can be considered reasonably known under the ambit of roof covering the fact that:
- Are know the bituminous tiles;
- Are known laminated bituminous tiles constituted by a first base layer to which is superimposed a second decorative layer, where said first layer and the second layer have at least part of the perimeter profile constituted by the upper edge and from the side edges which is coincident;
- Are known laminated bituminous tiles where the coupling between the said first and second decorative layer which are each of different color tone and with at least said second layer that is of the type contoured along the bottom edge, gives the mantle covering obtained by lateral joining of individual tiles and overlap for each course, a pattern with three-dimensional effect.

### Drawbacks

In principle, the solutions adopted to date appear to be suitable for use with protective purposes, however, against the same may be ascribed certain drawbacks.
First, the configuration of the bituminous laminated tile known with patterns by three-dimensional effect, is forced to dimensional constraints, which substantially they affect the exposure of the surface to a confined area of reduced surface. This circumstance requires the contractor to use as noted above, from n. 6 to n. 7 tiles per square meter, with its relative time and cost of installation.

It can be reasonably agreed, that the conventional coating systems that require the simple juxtaposition in side abutment between bituminous tiles and the adjacent one for each course, involve in the case of slopes greater than 15°, the coupling of the tiles to other waterproofing systems, a circumstance that further complicates the installation with laying speeds that are particularly long, albeit considerably influencing the overall costs.

All things considered it is reasonable to the needs of companies in the sector to identify innovative solutions provided of a good degree of improvement compared to the solutions used to date.

### Summary of the invention

These and other purposes are achieved with the present invention according to the characteristics of the included claims

### Purposes

In this way, through the considerable creative contribution whose effect represents an immediate and considerable technical progress, are achieved remarkable multiple purposes and advantages.

A first purpose with respect to the classic bituminous coverings was to provide to significantly increase the exposed surface area for each bituminous tile, which, with the bituminous tile purpose of the present invention, becomes at least 50% of the tile itself. From the point of view of the advantage is obtained, therefore, a consequent reduction in the number of tiles per square meter of surface to be coated, with a significant cost containment, together with the time of installation which are proportionally reduced.

A second purpose was to simplify the procedures for installation, especially for those types of roofs with a slope over 15°. In particular, using the innovative installation system with protected side approach the product is waterproofing on its own, without the need to pair it with other waterproofing systems.

Another purpose was to improve the three-dimensional optical effect. The multilayer geometry, through the creation of notches or slots, formed at the second layer of each bituminous tile, allows to obtain three-dimensional geometries of a covering system mostly flat, with an optical effect which recalls the three-dimensionality of the traditional covering systems such as clay tiles, although always acting on the geometries of the second layer, by invoking an optical effect of various types, similar to concrete tiles and slabs of slate. It therefore seems reasonable to believe that using a flat laminated product which, compared to the technologies mentioned above, has advantages in terms of reduction of the weight per square meter, one can achieve an increase in the range of slopes in which the product can be applied as they can ensure of its own roof waterproofing, without it being necessary to install additional sealing elements.

Finally, it is significant to note that the presence of a self-adhesive area on the lower surface of the support layer, allows to facilitate the step of installation of the product and to increase at the same time the sealing of the roof.

In conclusion, these purposes and advantages, have the advantage not negligible, to achieve a bituminous laminated tile and a cladding system for covering a roof with a good technological content.

These and other advantages will appear from the following detailed description of a preferred solution with the help of the enclosed schematic drawings whose details of execution are not to be considered limitative but only and exclusively illustrative.

### Drawings containt

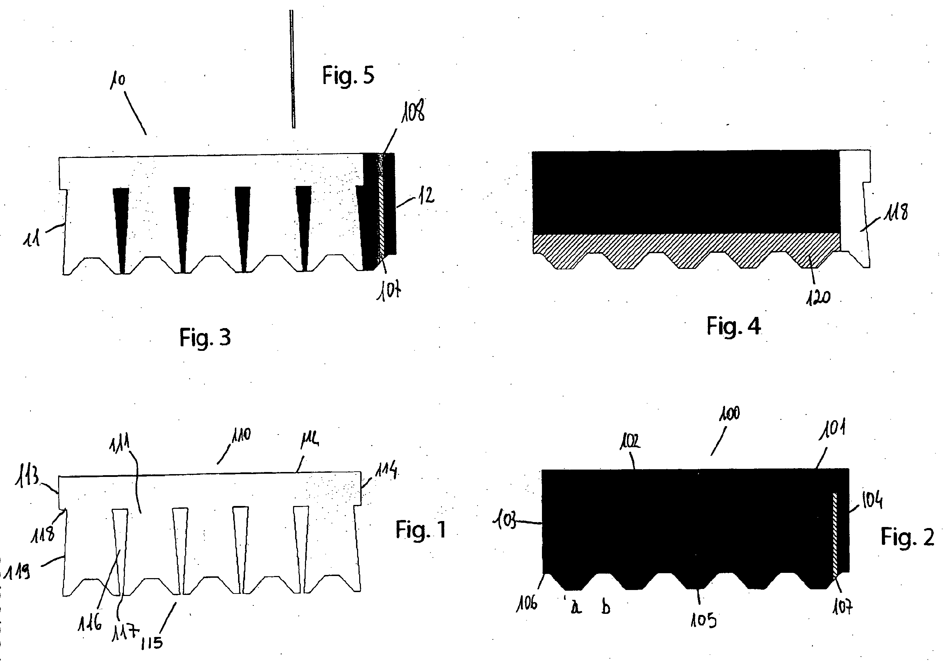

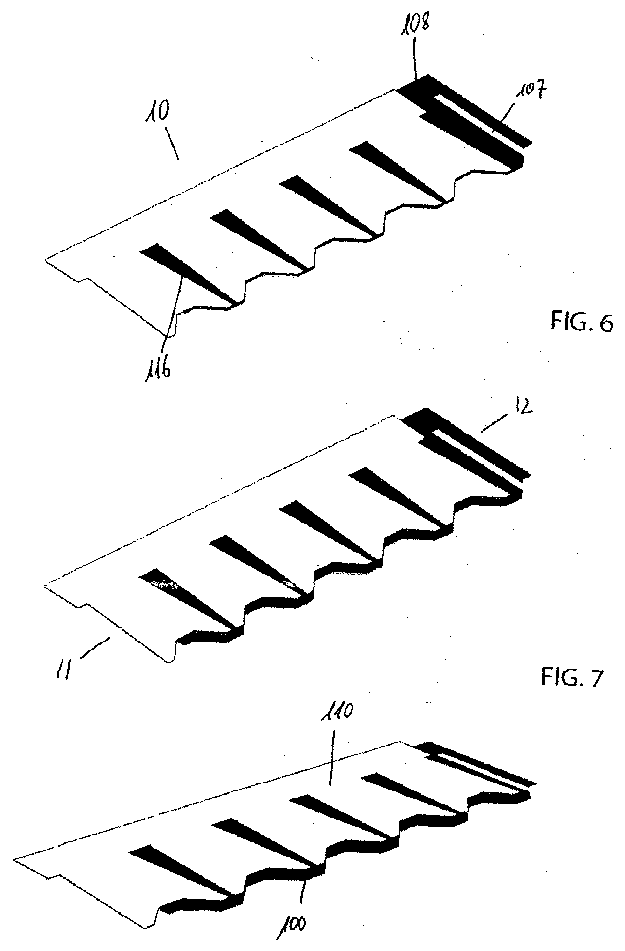

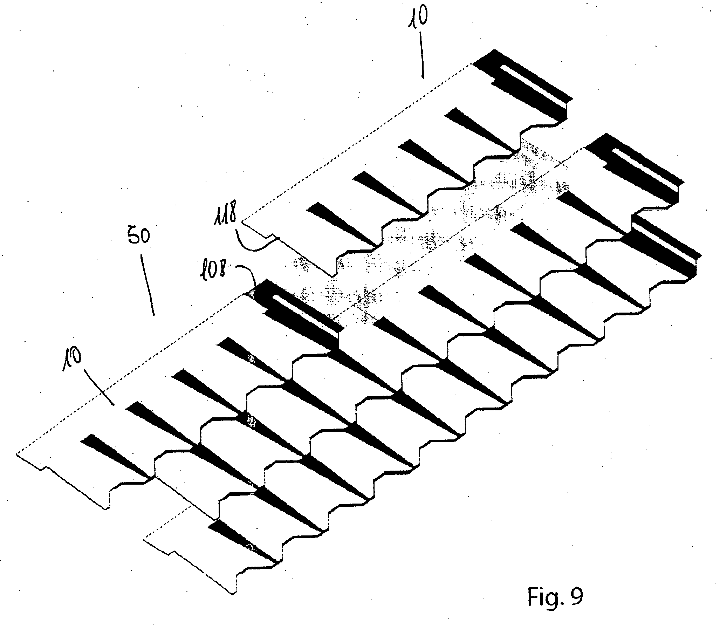

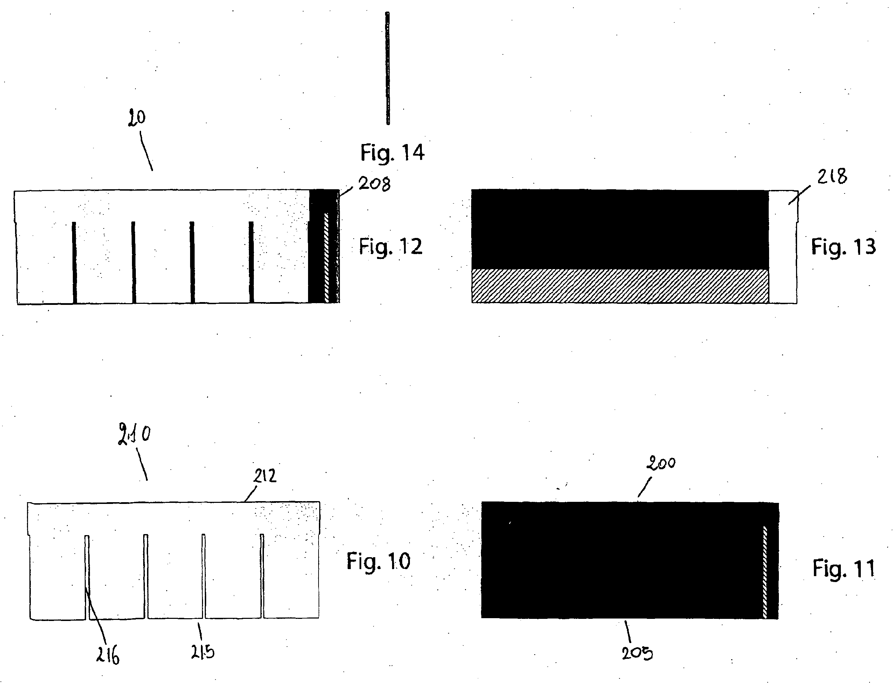

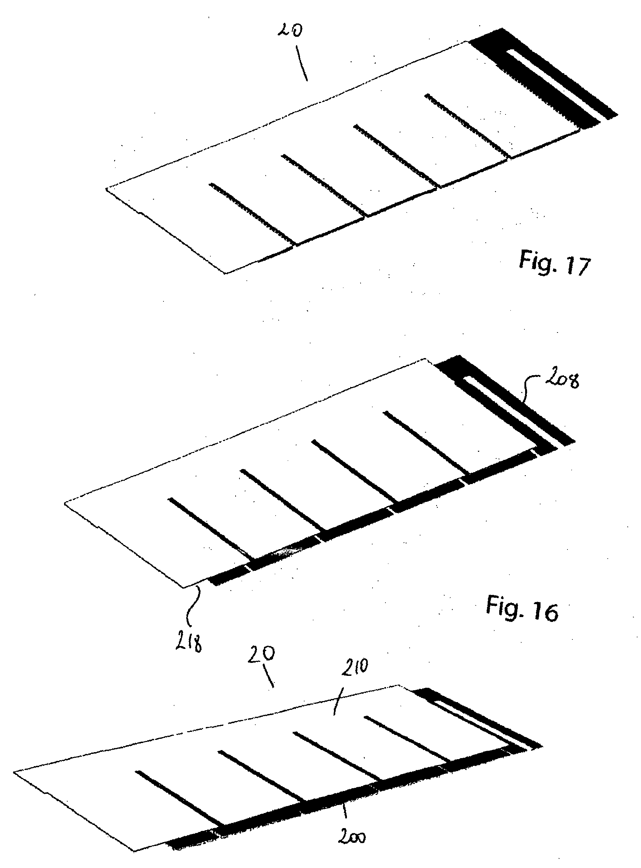

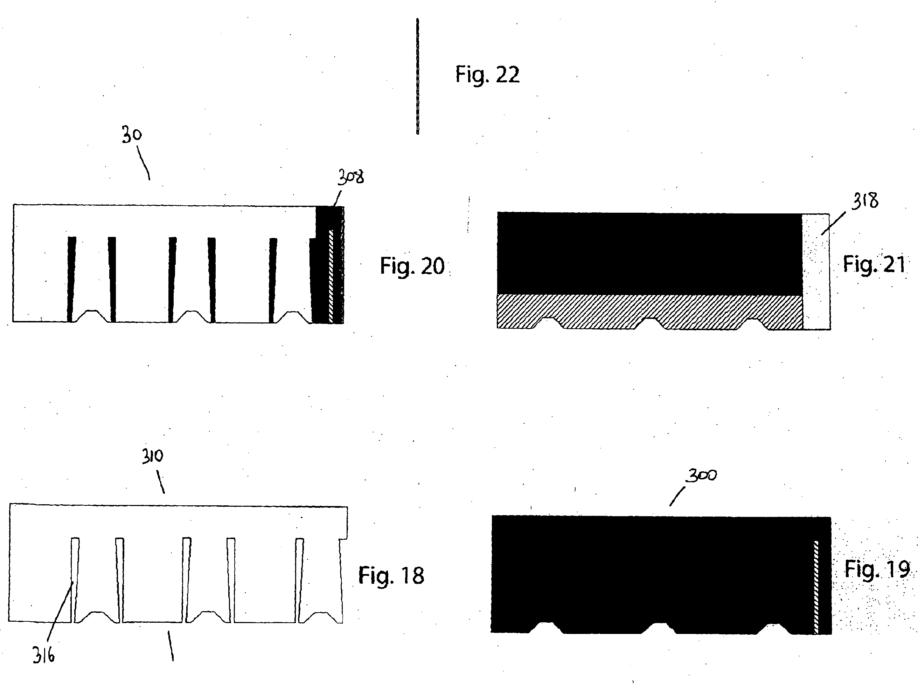

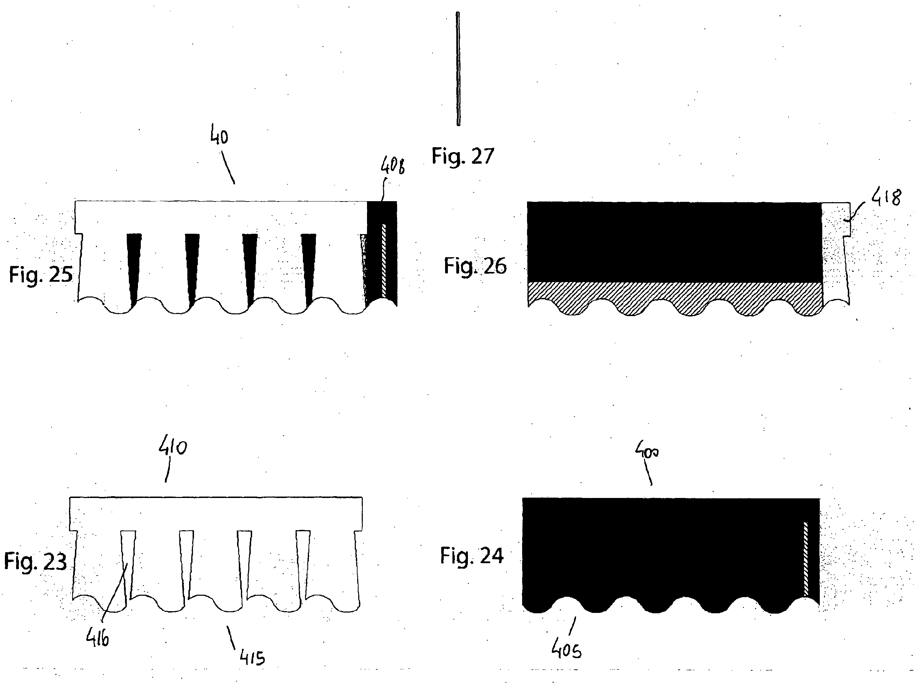

□ Figure 1 is a top view of a first embodiment of fret;
□ Figure 2 is a top view of the band to which unite the fret referred to Figure 1;
□ Figure 3, is a view of the front side of the bituminous laminated tile, with pattern by clay tile effect, coupling the fret and the band referred to Figs. 1 and 2;
□ Figure 4, is a view of the rear side of the bituminous laminated tile referred to in Fig 3;
□ Figure 5 is a side view of the bituminous laminated tile as in Figure 3 and 4;
□ Figure 6 is an isometric view of the bituminous tile as in Figure 3 and 4;
□ Figure 7 is a cross-section axonometric of bituminous tile referred to in the previous figure;
□ Figure 8 is a cross-section perspective of the bituminous tile as in Figure 6;
□ Figure 9 is an isometric view of the covering mantle with laminated bituminous tiles of the type of Figure 3 and 4;
□ Figure 10 is a top view of a second solution of fret;
□ Figure 11 is a top view of the end to be joined to the corresponding fret referred to in Figure 10;
□ Figure 12 is a front view of a second solution of bituminous laminated tile;
□ Figure 13 is a rear view of the bituminous laminated tile as in Figure 12;
□ Figure 14 is a side view of the bituminous laminated tile as in Figures 12 and 13;
□ Figure 15 is a cross-section perspective of the bituminous laminated tile of which in Figures 12 and 13;
□ Figure 16 is a cross-section axonometric of bituminous laminated tile as in Figure 15;
□ Figure 17 is an isometric view of the bituminous tile as in Figure 15;
□ Figure 18 is a top view of a third solution of fret;
□ Figure 19 is a top view of one end to be coupled to the solution of fret referred to in the previous figure;
□ Figure 20 is a front view of the third solution of bituminous laminated tile;
□ Figure 21 is a rear view of the bituminous laminated tile referred to in Figure 20;
□ Figure 22 is a side view of the bituminous laminated tile as in Figures 20 and 21;
□ Figure 23 is a top view of a fourth solution of fret;
□ Figure 24 is a top view of one end to be coupled to the solution of fret referred to in the previous figure;
□ Figure 25 is a front view of the fourth solution of bituminous laminated tile;
□ Figure 26 is a rear view of the bituminous laminated tile referred to in Figure 25;
□ Figure 27 is a side view of the bituminous laminated tile as in Figures 25 and 26.

### Pratical descripton of the invention

The present invention, relates to a bituminous laminated tile (10, 20, 30, 40) for roof covering, of the type apt to reproduce a pattern of the roof covering (50) of three-dimensional effect (Fig. 9), which assumes a particular optical effect such as to confer the optical appearance similar overall to a roof covering, for example in clay, such as the clay tile, but also similar to mantle coverings made with concrete tiles and slabs of slate.

Figure 3 represents a bituminous laminated tile (10) of the type designed to give the roof covering (50) a three-dimensional look similar to the clay tile. The said laminated bituminous tile (10), is of the type constituted by two composite layers pre-coupled, respectively a first layer called band (100) (Fig. 2), and a second layer called fret (110) (Fig. 1). Both the band (100), as the fret (110), are each constituted by a sheet of support material, referred to as carrier, for example glass fiber, polyester or paper felt or non-woven fabric, in correspondence of the facades of which is to be deposited a layer of organic material or not, waterproofing, such as the bitumen or as inorganic polymeric material, LDPE, HDPE, polypropylene or thermoplastic polyolefin, SBS, SIS, SBR, or a mixture of the two types, and a layer of material finishing, such as the colored stone material (basalt, gabbro, diabase, slate) or metallic material (copper, aluminum, zinc, titanium or other metal alloys), which provides in addition to protection from UV rays, also to the stabilization of the material, while conferring a desired pigmentation. The different pigmentation between the interface (101) of the coupling band (100) to the fret (110) and the pigmentation of the visible surface (111) of said fret (110) allows detection with a play of colors wanted and contrast a desired depth, so as to distinguish said fret (110) from the base band (100).

Even more in detail, the band (100) (Fig. 2) has the upper edge with a profile (102) side ridge, which is rectilinear and is orthogonal with respect to the edges of head respectively right and left (103, 104), which are rectilinear and parallel and which define the lateral extremities of said band (100). The profile of the lower edge (105) gutter side, is shaped in such a way as to give a fretted shape appearance. More in particular said lower edge (105) reproduces ideally a series of trapezoidal geometric figures (a, b) symmetrical, in positive (a) and negative (b), contiguous, and ends in correspondence of each of the two edges of the head (103, 104), with a broken line portion (106) which is orthogonal with respect to each of the two edges of the head (103, 104) so as to reproduce in negative about half of a negative geometric figure (b). In correspondence of the right side of the band (100) slightly reentrant and parallel with respect to the right edge (104) of the band (100) is present in the form of a rectilinear strip an adhesive pad (107).

Figure 1, represents the layer of fret (110) that must be coupled in a staggered manner to the band (100) of Figure (2). The fret (110) is shaped so as to have a profile with the top edge (112), side ridge, which is rectilinear and that is defined at both ends by the two head edges (113, 114). At the surface (111), are formed equidistant and for removal of material, some notches (116) symmetrical, in the form of inverted triangles open at the vertex (117) along the profile of the lower edge (115), which bottom edge (115) substantially reproduces the same shape of the lower edge (105) of the band (100), recalling divided by sectors, the development in positive (in) and negative (b) of trapezoidal geometric figures, so that the said notches (116) with the vertex (117) separating in a symmetrical manner each trapezoidal positive figure (a). In this way the profile of the lower edge (115) side eaves, of the fret (110) will be discontinuous, with the sole trapezoidal geometric figures negative (b) without solution of continuity, while the edges of the head (113, 114) are shaped so as to reproduce a profile that invokes roughly half of the profile of the notches (116), with a virtually horizontal portion (118) parallel to the edge (112) followed by an oblique side (119).

The laminated bituminous tile (10) of Figure 3, is obtained by coupling to the band (100) at the interface (101) the fret (110), in a staggered manner in the longitudinal direction such that the heads (11, 12) of said bituminous laminated tile (10), present respectively on the one hand, a fret lip (118) (Fig. 4), the other (fig. 3) a lip band (108). In this way to out-edging from at least one head (11, 12) of the bituminous tile (10) is a lip (118, 108) so as to allow for each course of laminate bituminous tiles (10) the overlap and the juxtaposition of said heads (11, 12) with the heads reciprocal male, female of a similar bituminous tile (10). The back side of the bituminous laminated tile (10), (see Fig 4) that coincides with the back side of the band (100), and therefore on the lying face to the supporting surface to be coated, is concerned along the lower portion of the gutter side, by a longitudinal self-adhesive strip protected from a film to be removed (120), where said self-adhesive strip (120) at least partially covers the surface which corresponds to the fretted part (a, b) of the said bituminous tile (10). In the test solution, and at preferential title, the laminated bituminous tile (10) has a width of 1000 mm, with a height equal to 340 mm, in such a way that the heads (11, 12) out edge with each lip (118, 108) for 91 mm, whether it be of the said lip (118) of fret (110) whether the said lip (108) of the band (100). Even more in detail, the laminated bituminous tile (10) has the height of the notches (116) of mm 245 which substantially defines the end of exposure of the fretted portion, so as to residue an horizontal band and of longitudinal overlap for the second course of laminated bituminous tiles (10) of height of approximately 95 mm at the area next to the edge (112) of the fret (110).
It can therefore be agreed in principle that the notches (116) extend for a height whose size is between 70% ± 15% in proportion to the total height of said tile (10, 20, 30, 40) and where the length and the height of the fret (110, 210, 310, 410) is equal to the length and height of the band (100, 200, 300, 400).

In the coating system object of the present invention, for roof covering, (see Figure 9), the laminated tiles (10) are to be juxtaposed to courses starting from the gutter line, i.e. proceeding from downstream to upstream, through a protected side stepover of the said laminated bituminous tiles (10). The sequence of installation provides that, once laid the first tile (10), be overlapped the out edging lip (118) of the second tile (10) on the out edging lip (108) of said first tile (10) already installed; this overlap is sealed by the side pad (107) present on the out edging lip (108) of said lower tile (10). We will then proceed with the protected stepover all of the tiles (10) necessary to cover the width of the surface to be waterproofed.
Subsequently, proceeding towards the ridge line, there is provided then to install the second course, partially overlapping the tile (10) of the upper course with respect to the tile (10) of the lower course, leaving exposed the tile (10) of the lower course for the whole height of the notches (116) that are created on each laminated bituminous tiles (10), in this way obtaining a surface of exposure of at least 55% of the total area of the tile.

The laminated bituminous tile (20) (Fig. 12) is a second solution, substantially equivalent with respect to the previous one, but able to confer a different optical effect, in which areas of exposure recall an optical effect similar to the slabs of slate. From a dimensional view point the laminated bituminous tile (20) has, in principle, the same dimensions of the laminated bituminous tile (10), keeping the proportions, both in reference to the lip (218) of the fret (210) (Figs. 10 , 13) as is in reference to the lip (208) of the band (200) (Figs. 11, 12), as well as relatively to each notch (216). Also in this case the laminated bituminous tile (20) is obtained by coupling to the first base layer or band (200) the fret (210), so as to offset longitudinally the said two layers such as to obtain for each head of the tile (20) an out edging lip (208, 218). The band (200) presents the lower edge (205) which is substantially straight without solution of continuity, whereas the lower edge (215) of the fret (210) is discontinuous being interrupted by the notches (216) equidistant and parallel.
From the aesthetic point of view, combining laterally and overlapping in the longitudinal direction the heads of the laminated bituminous tiles (20), in forming the covering mantle, and superimposing the course of bituminous tiles upstream than downstream, because each notch (216) is rectilinear and perpendicular to the edge (212) of the fret (210), the exposed end of the bituminous tile (20) reproduces an aesthetic effect similar to the slabs of slate.

The laminated bituminous tiles (30) shown in Figure 20, is essentially an intermediate solution that combines the features of the previous two laminated bituminous tiles (10, 20) giving the covering mantle, obtained by combining for each course the laminated bituminous tiles (30) with overlapping lips (308, 318) and by overlapping the course of laminated bituminous tiles (30) upstream, an optical effect similar to the covering mantle of Roman tiles. In particular, said laminated bituminous tile (30) is formed by coupling in a staggered manner in the longitudinal direction and as such the previous solutions, the fret (310) (Fig. 18) to the band (300) (Fig. 19), so as to obtain a lip (308, 318) that out edges from each side of the head of said laminated bituminous tile (30). In this case, the notches (316) of the laminated bituminous tiles (30) formed on the fret (310), have the geometric shape like a right triangle obtaining sectors (Fig. 18) that alternate in correspondence of the lower and discontinuous edge (315), eaves side, a profile similar to that present in fret (110) with the one present along the fret (210). The dimensions remain substantially unchanged compared to previous solutions (10, 20), with a slight difference in correspondence of the lip whose width is detected in a total of 85 mm, instead of 91 mm attributable to said solutions of previous tiles (10, 20).

Again, similarly to previous solutions, also Figure 25, represents a solution of laminated bituminous tile (40), whose juxtaposition to a similar laminated bituminous tile (40), by overlap in the longitudinal direction of the protruding lips (408, 418), as well as of the roof tiles (40) of the upper course, gives an optical effect of the covering surface similar to that of the corrugated roofing. Even in such a case, the laminated bituminous tile (40) is obtained by mating and overlapping in a staggered manner in the longitudinal direction the fret (410) to the band (400) so to be obtained for each head of approach of the laminated bituminous tile (40) the said protruding lips (408, 418) to approach and overlap with those of the said laminated bituminous tile (40) of the same course. In this case, the lower edge (415) of the eaves side of the fret (410) (Fig. 23), is characterized by a profile that calls for each sector two continuous semi elliptical opposing lines, each sector is divided from the adjacent one by an asymmetric notch (416) almost triangular tapered reversed conically similarly to the notching solutions (116, 316). In this case the profile of the lower edge (405) of the band (400) (Fig. 24) is capped defining a wavy line. Regarding the size of the laminated bituminous tile (40), they are substantially similar to those of previous laminated bituminous tile (10-30), varying only in relation to height and which in this case is 240 mm for the range of exposed fret stripe, and therefore of the notch (416) and of 100 mm for the band that is to be superimposed by similar laminated bituminous tile (40) of a second course.

## Claims

1. A cladding system for a roof covering wherein the pattern of the covering mantle has a three-dimensional effect, said cladding system comprising laminated bituminous tiles, wherein each laminated bituminous tile (10, 20, 30, 40) is of the type composed of two composite layers having the same length and height, coupled and overlapping staggered in the longitudinal direction, said two composite layers being respectively, the band (100, 200, 300, 400), consisting of at least one support material on which is deposited a layer of organic or inorganic waterproof material coated with a finishing layer with properties of UV protection of the waterproofing layer, and the decorative fret (110, 210, 310, 410), said first and second composite layer having lateral edges forming opposite tile heads (11,12),said first and second composite layer being coupled so as to be staggered with respect to the longitudinal direction of said laminated bituminous tile (10, 20, 30, 40) so as to obtain for each head (11, 12) an out-edging lip (108, 118), (208 , 218), (308, 318), (408, 418), respectively a fret lip (118, 218, 318, 418) in correspondence of a first head (11), and a band lip (108, 208, 308, 408) in correspondence of the opposite head (12), wherein said cladding system and its covering mantle (50) is obtained by combining sideways and overlapping the lip (108, 118), (208 , 218), (308, 318), (408, 418) of at least the band (100, 200, 300, 400) and the fret (110, 210, 310, 410) of each contiguous laminated bituminous tile (10, 20 30, 40) of the same type in a first course of laminated bituminous tile contiguous (10, 20, 30, 40) and wherein said first course of contiguous laminated bituminous tiles (10, 20, 30, 40), upstream of the line of pose, is superimposed by a same second upstream course of laminated contiguous bituminous tiles (10, 20, 30, 40), in such a way that the area of exposure of each laminated bituminous tile (10, 20, 30, 40) of said first downstream course, is greater than 55% of the total area of each laminated bituminous tile (10, 20, 30, 40), **characterised in that at least** one of said band lip (108, 208, 308, 408) and said fret lip (118, 218, 318, 418) is provided with an adhesive pad (107) for sealing said overlap between the fret lip and the band lip of two contiguous laminated bituminous tiles.

2. A cladding system for a roof covering wherein the pattern of the covering mantle has a three-dimensional effect according to the previous claim, **characterized in that** the decorative fret (110, 310, 410) of the bituminous laminated tile (10, 30, 40) is provided with parallel notches (116, 316, 416) which, deriving from the lower longitudinal edge (115, , 315, 415) extend for a height whose size is between 70% ± 15% in proportion to the total height of said tile (10, 30, 40), wherein said parallel notches (116, 316, 416) are formed equidistant for removal of material, said notches (116, 316, 416) are symmetrical, in the form of inverted triangles open at the vertex (117) along the lower longitudinal edge (115, 315, 41 5).

3. A cladding system for a roof covering wherein the pattern of the covering mantle has a three-dimensional effect according to one the previous claim, **characterized in that** each laminated bituminous tile (10, 20, 30, 40) presents a self-adhesive longitudinal strip situated on the lower portion of its rear side along the lower longitudinal edge of said rear side, said self-adhesive strip (120) covers at least partially the surface of the fretted part (a, b) of the laminated bituminous tile (10, 20, 30, 40) installed below said bituminous tile (10, 20, 30, 40).

4. A laminated bituminous tile composed of two composite layers having the same length and height, coupled and overlapping staggered in the longitudinal direction, respectively, the first lower composite layer being the band (100, 200, 300, 400), constituted by at least one support material on which is deposited a layer of organic or inorganic waterproof material coated with a finishing layer with properties of UV protection of the waterproofing layer, and the second upper composite layer being the decorative fret (110, 210, 310, 410), said first and second composite layer having lateral edges forming the opposite tile heads (11,12),said first and second composite layer being coupled so as to be staggered with respect to the longitudinal direction of said laminated bituminous tile (10, 20, 30, 40) so as to obtain for each head a out-edging lip (108, 118), (208, 218), (308, 318), (408,418), respectively a fret lip (118, 218, 318, 418) in correspondence of the first head (11), and a band lip (108, 208, 308, 408) in correspondence of the opposite second head (12); where the decorative fret (110, 210, 310, 410) of the laminated bituminous tile (10 , 20, 30, 40) is provided with parallel notches (116, 216, 316, 416) which, deriving from the lower longitudinal edge (115, 215, 315, 415) extend for a height whose size is included in proportion between 70% ± 15% compared to the total height of said tile (10, 20, 30, 40) and where the length and the height of the fret (110, 210, 310, 410) is equal to the length and height of the band (100, 200, 300, 400); where the lower longitudinal edge (115, 215, 315, 415) of at least the decorative fret (110, 210, 310, 410) of the laminated bituminous tile (10, 20, 30, 40) presents a discontinuous profile, **characterised in that** at least one of said band lip (108, 208, 308, 408) and said fret lip (118, 218, 318, 418) is provided with an adhesive pad (107) for sealing the overlap between the fret lip and the band lip of two such contiguous laminated bituminous tiles, when installed next to each other in the same course of tiles, whereby said fret lip is installed on top of said band lip.

5. A laminated bituminous tile in accordance with claim 4, **characterized by** the fact that a self-adhesive longitudinal strip is situated on the lower portion of the rear side along the lower longitudinal edge of the rear side of the laminated bituminous tile (10, 20, 30, 40), wherein said self-adhesive longitudinal strip is protected by a film to be removed (120), said self-adhesive strip (120) can cover, when installed in a roof covering, at least partially the surface of the fretted part (a, b) of a similar laminated bituminous tile (10, 20, 30, 40) installed below said bituminous tile (10, 20, 30, 40).

## Patentansprüche

1. Verkleidungssystem für eine Dachschalung, wobei das Muster des Deckmantels dreidimensionalen Effekt hat, mit laminierten Bitumenschindeln, wobei jede laminierte Bitumenschindel (10, 20, 30, 40) aus zwei zusammengesetzten Schichten mit derselben Länge und Höhe besteht, gekoppelt und überlappend versetzt in Längsrichtung, wobei die beiden zusammengesetzten Schichten zum einen das Band (100, 200, 300, 400) sind, bestehend aus mindestens einem Trägermaterial, auf dem eine Schicht aus organischem oder anorganischem wasserdichtem Material aufgebracht wird, das mit einer Deckbeschichtung mit UV-Schutz Eigenschaften für die Wasserabdichtungsschicht überzogen wird, und zum anderen der dekorative Mäander (110, 210, 310, 410), wobei die erste und die zweite zusammengesetzte Schicht seitliche Ränder umfassen, die gegenüberliegende Ziegelköpfe (11,12) bilden, wobei die erste und die zweite zusammengesetzte Schicht gekoppelt sind, um in Bezug auf die Längsrichtung der laminierten Bitumenschindel (10, 20, 30, 40) versetzt zu sein, um für jeden Kopf (11, 12) eine auskantende Lippe (108, 118), (208, 218), (308, 318), (408, 418), bzw. eine Abnutzungslippe (118, 218, 318, 418) an einem ersten Kopf (11) zu erhalten und eine Bandlippe (108, 208, 308, 408) an dem gegenüberliegenden Kopf (12), wobei das Verkleidungssystem und sein Deckmantel (50) durch seitliches und überlappendes Kombinieren der Lippe (108, 118), (208,218), (308, 318), (408, 418) von mindestens dem Band (100, 200, 300, 400) und des Mäanders (110, 210, 310, 410) jeder angrenzenden laminierten Bitumenschindel (10, 20, 30, 40) von derselben Art erhalten wird, in einem ersten Verlauf von angrenzenden laminierten Bitumenschindeln (10, 20, 30, 40), und wobei auf den ersten Verlauf von angrenzenden laminierten Bitumenschindeln (10, 20, 30, 40), stromaufwärts der Verlegungslinie, ein selbe zweiter stromaufwärtiger Verlauf von laminierten angrenzenden Bitumenschindeln (10, 20, 30, 40) aufgelegt wird, so dass die Aussetzungsfläche jeder laminierten Bitumenschindel (10, 20, 30, 40) des ersten stromabwärtigen Verlaufs größer als 55% der Gesamtfläche jeder laminierten Bitumenschindel (10, 20, 30, 40) ist, **gekennzeichnet dadurch, dass** mindestens eine, die Bandlippe (108, 208, 308, 408) und/oder die Mäanderlippe (118, 218, 318, 418), ein Klebekissen (107) zur Abdichtung besagte Überlappung zwischen der Mäanderlippe und der Bandlippe zweier angrenzender laminierter Bitumenschindeln aufweist.

2. Verkleidungssystem für eine Dachschalung, wobei das Muster des Deckmantels einen dreidimensionalen Effekt nach dem vorherigen Anspruch hat, **gekennzeichnet dadurch, dass** der dekorative Mäander (110, 310, 410) des bituminösen laminierten Dachziegels (10, 30, 40) parallele Kerben (116, 316, 416) aufweist, die, ausgehend von der unteren Längskante (115, 315, 415), in einer Höhe verlaufen, die zwischen 70% ± 15% im Verhältnis zu der gesamten Höhe des Dachziegels (10, 30, 40) beträgt, wobei besagte parallele Kerben (116, 316, 416) zur Materialentfernung abstandsgleich sind und die Kerben (116, 316, 416) symmetrisch sind, in Form von umgekehrten Dreiecken, die am Scheitelpunkt (117) entlang der unteren Längskante (115, 315, 41 5) offen sind.

3. Verkleidungssystem für eine Dachschalung, wobei das Muster des Deckmantels einen dreidimensionalen Effekt nach einem der vorherigen Ansprüche hat, **gekennzeichnet dadurch, dass** jede laminierte Bitumenschindel (10, 20, 30, 40) einen selbstklebenden Längsstreifen auf dem unteren Teil seiner Rückseite entlang der unteren Längskante der Rückseite aufweist, wobei der selbstklebende Streifen (120) zumindest teilweise die Oberfläche des Mäanderteils (a, b) der laminierten Bitumenschindel (10, 20, 30, 40) abdeckt, der unter der Bitumenschindel (10, 20, 30, 40) installiert ist.

4. Laminierte Bitumenschindel, bestehend aus zwei zusammengesetzten Schichten mit derselben Länge und Höhe, jeweils gekoppelt und überlappend in Längsrichtung versetzt, wobei die erste untere zusammengesetzte Schicht das Band (100, 200, 300, 400) ist, bestehend aus mindestens einem Trägermaterial, auf dem eine Schicht aus organischem oder anorganischem wasserdichtem Material aufgebracht wird, das mit einer Deckbeschichtung mit UV-Schutz-Eigenschaften für die Wasserabdichtungsschicht überzogen ist, wobei die zweite obere zusammengesetzte Schicht der dekorative Mäander (110, 210, 310, 410) ist, wobei die erste und die zweite zusammengesetzte Schicht seitliche Ränder aufweist, die die gegenüberliegenden Ziegelköpfe (11, 12) bilden, und die erste und die zweite zusammengesetzte Schicht gekoppelt sind, um in Bezug auf die Längsrichtung der laminierten Bitumenschindel (10, 20, 30, 40) derart versetzt zu sein, dass man für jeden Kopf eine auskantende Lippe (108, 118), (208, 218), (308, 318), (408, 418) erhält, bzw. eine Mäanderlippe (118, 218, 318, 418) an dem ersten Kopf (11) und ein Bandlippe (108, 208, 308, 408) an dem gegenüberliegenden zweiten Kopf (12); wobei der dekorative Mäander (110, 210, 310, 410) der laminierten Bitumenschindel (10, 20, 30, 40) parallele Kerben (116, 216, 316, 416) aufweist, die, ausgehend von der unteren Längskante (115, 215, 315, 415), auf einer Höhe verlaufen, die zwischen 70% ± 15% verglichen mit der gesamten Höhe des Dachziegels (10, 20, 30, 40) beträgt, und wobei die Länge und die Höhe des Mäanders (110, 210, 310, 410) gleich der Länge und Höhe des Bandes (100, 200, 300, 400) ist; wobei die untere Längskante (115, 215, 315, 415) mindestens des dekorativen Mäanders (110, 210, 310, 410) der laminierten Bitumenschindel (10, 20, 30, 40) ein diskontinuierliches Profil aufweist, **gekennzeichnet dadurch, dass** mindestens die Bandlippe (108, 208, 308,408) und/oder die Mäanderlippe (118, 218, 318, 418) ein Klebekissen (107) zur Abdichtung der Überlappung zwischen der Mäanderlippe und der Bandlippe von zwei solchen angrenzenden laminierten Bitumenschindeln aufweist, wenn sie nebeneinander in demselben Verlauf von Ziegeln installiert sind, wodurch die Mäanderlippe auf der Bandlippe installiert ist.

5. Laminierte Bitumenschindel nach Anspruch 4, **dadurch gekennzeichnet, dass** ein selbstklebender Längsstreifen auf dem unteren Teil der Rückseite entlang der unteren Längskante der Rückseite der laminierten Bitumenschindel (10, 20, 30, 40) liegt, wobei der selbstklebende Längsstreifen durch eine Folie geschützt ist, die (120) entfernt werden kann, wobei der selbstklebende Streifen (120), wenn er in einer Dachschalung installiert ist, zumindest teilweise die Oberfläche des Mäanderteils (a, b) einer ähnlichen laminierten Bitumenschindel (10, 20, 30, 40) abdecken kann, der unter der Bitumenschindel (10, 20, 30, 40) installiert ist.

## Revendications

1. Système de bardage pour une couverture de toit où le motif du manteau de couverture a un effet tridimensionnel, ledit système de bardage comprenant des tuiles bitumineuses stratifiées, où chaque tuile bitumineuse stratifiée (10, 20, 30, 40) est du type composé de deux couches composites ayant la même longueur et hauteur, accouplées et se chevauchant échelonnées dans la direction longitudinale, lesdites deux couches composites étant respectivement, la bande (100, 200, 300, 400), étant composée d'au moins un matériel de support sur lequel est déposée une couche de matériel imperméable organique ou inorganique revêtue d'une couche de finition avec des propriétés de protection anti-UV de la couche d'imperméabilisation, et la frette décorative (110, 210, 310, 410), lesdites première et deuxième couches composites ayant des bords latéraux formant des têtes de tuiles opposées (11, 12), lesdites première et deuxième couches composites étant accouplées afin d'être échelonnées par rapport à la direction longitudinale de ladite tuile bitumineuse stratifiée (10, 20, 30, 40) afin d'obtenir pour chaque tête (11, 12) une lèvre hors bordure (108, 118), (208, 218), (308, 318), (408, 418), respectivement une lèvre de frette (118, 218, 318, 418) au niveau d'une première tête (11), et une lèvre de bande (108, 208, 308, 408) au niveau de la tête opposée (12), où ledit système de bardage et son manteau de couverture (50) est obtenu en combinant latéralement et en faisant chevaucher la lèvre (108, 118), (208, 218), (308, 318), (408, 418) d'au moins la bande (100, 200, 300, 400) et la frette (110, 210, 310, 410) de chaque tuile bitumineuse stratifiée contiguë (10, 20, 30, 40) du même type dans une première série de tuiles bitumineuses stratifiées contiguës (10, 20, 30, 40) et où ladite première série de tuiles bitumineuses stratifiées contiguës (10, 20, 30, 40), en amont de la ligne de pose, est superposée par une même deuxième série en amont de tuiles bitumineuses stratifiées contiguës (10, 20, 30, 40), de façon à ce que la zone d'exposition de chaque tuile bitumineuse stratifiée (10, 20, 30, 40) de ladite première série en aval soit supérieure à 55% de la zone totale de chaque tuile bitumineuse stratifiée (10, 20, 30, 40), **caractérisé en ce qu**'au moins l'une de ladite lèvre de bande (108, 208, 308, 408) et ladite lèvre de frette (118, 218, 318, 418) est pourvue d'un rembourrage adhésif (107) pour le scellage dudit chevauchement entre la lèvre de frette et la lèvre de bande de deux tuiles bitumineuses stratifiées contiguës.

2. Système de bardage pour une couverture de toit où le motif du manteau de couverture a un effet tridimensionnel selon la revendication précédente, **caractérisé en ce que** la frette décorative (110, 310, 410) de la tuile bitumineuse stratifiée (10, 30, 40) est pourvue d'encoches parallèles (116, 316, 416) qui, dérivant du bord longitudinal inférieur (115, 315, 415) s'étendent sur une hauteur dont la dimension est entre 70% ± 15% en proportion à la hauteur totale de ladite tuile (10, 30, 40), où lesdites encoches parallèles (116, 316, 416) sont formées équidistantes pour l'enlèvement de matériel, lesdites encoches (116, 316, 416) sont symétriques, sous la forme de triangles inversés ouverts au sommet (117) le long du bord longitudinal inférieur (115, 315, 415).

3. Système de bardage pour une couverture de toit où le motif du manteau de couverture a un effet tridimensionnel selon une la revendication précédente, **caractérisé en ce que** chaque tuile bitumineuse stratifiée (10, 20, 30, 40) présente une bande longitudinale autoadhésive située sur la partie inférieure de son côté postérieur le long du bord longitudinal inférieur dudit côté postérieur, ladite bande autoadhésive (120) revêt au moins partiellement la surface de la partie frettée (a, b) de la tuile bitumineuse stratifiée (10, 20, 30, 40) installée au-dessous de ladite tuile bitumineuse (10, 20, 30, 40).

4. Tuile bitumineuse stratifiée composée de deux couches composites ayant la même longueur et hauteur, accouplées et se chevauchant échelonnées dans la direction longitudinale, respectivement, la première couche composite inférieure étant la bande (100, 200, 300, 400), constituée par au moins un matériel de support sur lequel est déposée une couche de matériel imperméable organique ou inorganique revêtue d'une couche de finition avec des propriétés de protection anti-UV de la couche d'imperméabilisation, et la deuxième couche composite supérieure étant la frette décorative (110, 210, 310, 410), lesdites première et deuxième couches composites ayant des bords latéraux formant les têtes de tuiles opposées (11,12), lesdites première et deuxième couches composites étant accouplées afin d'être échelonnées par rapport à la direction longitudinale de ladite tuile bitumineuse stratifiée (10, 20, 30, 40) afin d'obtenir pour chaque tête une lèvre hors bordure (108, 118), (208, 218), (308, 318), (408, 418), respectivement une lèvre de frette (118, 218, 318, 418) au niveau de la première tête (11), et une lèvre de bande (108, 208, 308, 408) au niveau de la deuxième tête opposée (12); où la frette décorative (110, 210, 310, 410) de la tuile bitumineuse stratifiée (10, 20, 30, 40) est pourvue d'encoches parallèles (116, 216, 316, 416) qui, dérivant du bord longitudinal inférieur (115, 215, 315, 415) s'étendent sur une hauteur dont la dimension est incluse en proportion entre 70% ± 15% par rapport à la hauteur totale de ladite tuile (10, 20, 30, 40) et où la longueur et la hauteur de la frette (110, 210, 310, 410) est égale à la longueur et hauteur de la bande (100, 200, 300, 400) où le bord longitudinal inférieur (115, 215, 315, 415) d'au moins la frette décorative (110, 210, 310, 410) de la tuile bitumineuse stratifiée (10, 20, 30, 40) présente un profil discontinu, **caractérisée en ce qu**'au moins l'une de ladite lèvre de bande (108, 208, 308, 408) et ladite lèvre de frette (118, 218, 318, 418) est pourvue d'un rembourrage adhésif (107) pour sceller le chevauchement entre la lèvre de frette et la lèvre de bande de deux tuiles bitumineuses stratifiées contiguës, lorsqu'elles sont installées l'une à côté de l'autre dans la même série de tuiles, de manière que ladite lèvre de frette soit installée au-dessus de ladite lèvre de bande.

5. Tuile bitumineuse stratifiée selon la revendication 4, **caractérisée en ce qu**'une bande longitudinale autoadhésive est située sur la partie inférieure du côté postérieur le long du bord longitudinal inférieur du côté postérieur de la tuile bitumineuse stratifiée (10, 20, 30, 40), où ladite bande longitudinale autoadhésive est protégée par un film à éliminer (120), ladite bande autoadhésive (120) peut recouvrir, lorsque elle est installée dans une couverture de toit, au moins partiellement la surface de la partie frettée (a, b) d'une tuile bitumineuse stratifiée similaire (10, 20, 30, 40) installée au-dessous de ladite tuile bitumineuse stratifiée (10, 20, 30, 40).
